# EUROPÄISCHE PATENTANMELDUNG

(11) **EP 3 421 392 A1**
(43) Veröffentlichungstag der Anmeldung: **02.01.2019**
(21) Anmeldenummer: 18170496.6
(22) Anmeldetag: 03.05.2018
(51) Int. Cl.: B65G 1/04

(54) **REGALBEDIENGERÄT GEEIGNET FÜR DEN EINSATZ IN EINEM HOCHREGALLAGER**

(30) Priorität: 30.06.2017 DE 102017114643
(71) Anmelder: psb intralogistics GmbH, 66955 Pirmasens (DE)
(72) Erfinder: KÖLSCH, Ernst, 66957 Vinningen (DE); ROHDE, Christoph, 66955 Pirmasens (DE); MÜLLER, Martin, 66957 Vinningen (DE)
(74) Vertreter: Patentanwälte Dr. Keller, Schwertfeger Partnerschaft mbB

(57) **Zusammenfassung**

Die vorliegende Erfindung betrifft ein Regalbediengerät geeignet für den Einsatz in einem Hochregallager (10) umfassend eine Fahreinheit (32), eine Hubvorrichtung (34) und eine Entnahmeeinheit (36), die mittels der Hubvorrichtung (34) in vertikaler Richtung verfahrbar ist, wobei die Entnahmeeinheit (36) eine Lagerstangenübertragungseinheit umfasst, an der in horizontaler Richtung ein Trägerelement mit einem freien Endabschnitt (142; 242) vorgesehen ist, wobei an dem freien Endabschnitt (142; 242) unterhalb des Trägerelements wenigstens ein Greifelement (150; 250) angeordnet ist und wobei das wenigstens eine Greifelement (150; 250) bezüglich des freien Endabschnitts (142; 242) des Trägerelements vertikal und/oder horizontal zwischen einer eingefahrenen und einer ausgefahrenen Position verschiebbar ist.

## Beschreibung

Die vorliegende Erfindung betrifft ein Regalbediengerät, welches für den Einsatz in einem Hochregallager geeignet ist, sowie ein entsprechendes Hochregallager für hängende Waren umfassend ein solches Regalbediengerät.

Viele Waren werden in der Produktion, in Zwischenlagern usw. hängend transportiert und/oder gelagert. Darüber hinaus haben sich in vielen industriellen Bereichen Hochregallager bewährt, um ein großes Lager platzsparend zu gestalten. So wurden auch Hochregallager für hängende Waren entwickelt, welche eine sehr hohe Lagerkapazität besitzen und gleichzeitig den direkten Zugriff auf die Ware erlauben.

Ein Hochregallager für hängende Waren besteht üblicherweise aus einer Vielzahl von Hochregalen, die über Lagergassen voneinander getrennt sind. Hierbei bestehen die Hochregale für die hängenden Waren üblicherweise aus vertikalen Ständern, an denen Halterungen zur Aufnahme von Lagerstangen vorgesehen sind. In vertikaler Ebene ist eine Vielzahl von Lagerebenen vorgesehen, wobei in einer Lagerebene ein oder mehrere nebeneinander oder hintereinander angeordnete Lagerplätze vorgesehen sein können.

Ein solches Hochregallager für hängende Waren ist beispielsweise aus der EP 0 899 217 A1 bekannt.

Die hängenden Waren wie etwa Bekleidungsstücke hängen, wie auch in der EP 0 899 217 A1 beschrieben, üblicherweise an beweglichen Lagerstangen und werden zusammen mit den Lagerstangen transportiert und in die Lagerplätze der Hochregale eingelagert. Beim Auslagern der Waren werden die Waren zusammen mit der Lagerstange aus dem Lagerplatz entnommen. Somit verbleibt die hängende Ware so lange wie möglich während des Transports und während der Lagerung an den beweglichen Lagerstangen und muss nicht umgelagert werden.

In den Lagergassen zwischen den Hochregalen befinden sich Fahrgeräte, mit deren Hilfe das Ein- und Auslagern der leeren oder bestückten Lagerstangen in die Hochregale erfolgt.

Solche Fahrgeräte, die auch als Regalbediengerät bezeichnet werden, umfassen eine Fahreinheit, um sich zwischen den Lagergassen zu bewegen, und eine in vertikaler Richtung wirkende Hubvorrichtung, um die Lagerstangen mit der hängenden Ware auf die gewünschte Lagerebene zu bringen. Weiterhin umfassen die Fahrgeräte bzw. Regalbediengeräte eine Entnahmeeinheit, die dazu dient, die Lagerstangen von dem Regalbediengerät in das Hochregal zu befördern bzw. umgekehrt aus dem Hochregal zu entnehmen und auf das Regalbediengerät zu übertragen. Hierzu weist die Entnahmeeinheit üblicherweise Trägerelemente in Form von Trägerarmen auf, die mit Mitteln versehen sind, um die Lagerstangen aufzunehmen und während des Transports zu halten.

Zur Halterung der Lagerstangen in den Trägerarmen können, wie in der DE 10 2015 113 274 A1 gezeigt, V-förmige Aufnahmen an der Oberseite eines Trägerarms der Entnahmeeinheit vorgesehen sein. Alternativ hat sich der Einsatz von Greifelementen bewährt.

Um die Lagerstangen sicher aus einer Lagerposition aufzunehmen bzw. sicher in eine Lagerposition abzulegen, ist es erforderlich, dass die Greifelemente bzw. Aufnahmen der Trägerarme exakt in horizontaler und vertikaler Position in Bezug auf die aufzunehmende oder abzulegende Lagerstange ausgerichtet sind. In einem laufenden Betrieb ist es eine vergleichsweise hohe Herausforderung, die exakte Positionierung der Trägerarme sowie der Greifelemente bzw. Aufnahmen zum zuverlässigen Greifen bzw. Ablegen einer Lagerstange sicherzustellen.

Es ist daher Aufgabe der vorliegenden Erfindung, ein Regalbediengerät bereitzustellen, mit welchem Lagerstangen auf einfache Weise und sicher gegriffen werden können, insbesondere ein Regalbediengerät bereitzustellen, mit welchem Lagerstangen auf einfache Weise und sicher auch auf engstem Raum gegriffen werden können.

Erfindungsgemäß wird die Aufgabe durch ein Regalbediengerät gelöst, welches für den Einsatz in einem Hochregallager geeignet ist und welches eine Fahreinheit, eine Hubvorrichtung sowie eine Entnahmeeinheit, die mittels der Hubvorrichtung in vertikaler Richtung verfahrbar ist, umfasst, wobei die Entnahmeeinheit eine Lagerstangenübertragungseinheit umfasst, an der in horizontaler Richtung ein Trägerelement mit einem freien Endabschnitt vorgesehen ist, wobei an dem freien Endabschnitt unterhalb des Trägerelements wenigstens ein Greifelement angeordnet ist und wobei das wenigstens eine Greifelement bezüglich des freien Endabschnitts des Trägerelements vertikal und/oder horizontal zwischen einer eingefahrenen und einer ausgefahrenen Position verschiebbar ist.

Unter der Voraussetzung, dass das Trägerelement sich in der ordnungsgemäßen Position zur Übernahme oder Abgabe einer Lagerstange befindet, wird unter einer eingefahrenen Position die Position verstanden, in der das Greifelement fern von der Lagerstange ist. In der ausgefahrenen Position ist das Greifelement in der Lage, eine Lagerstange zu greifen.

Dadurch, dass das Greifelement in Bezug auf den freien Endabschnitt des Trägerelements verschiebbar ist, besteht die Möglichkeit, das Trägerelement weitgehend ohne Berücksichtigung der geometrischen Ausmaße der Greifelemente an der aufzunehmenden Lagerstange zu positionieren. Sobald das Trägerelement die gewünschte Position zur Übernahme der Lagerstange erreicht hat, kann das Greifelement in die Position gebracht werden, in der das Greifelement in der Lage ist, die Lagerstange zu greifen. Dies hat den Vorteil, dass der Sicherheitsabstand zwischen Trägerelement und Lagerstange beim Positionieren geringer als bei herkömmlichen Entnahmeverfahren gewählt werden kann.

Es ist weiter von Vorteil, dass der Abstand zwischen der eingefahrenen und der ausgefahrenen Position variabel einstellbar ist. Beispielsweise kann eine Vorrichtung zum vertikalen und/oder horizontalen Verstellen der Greifelemente eine Steuervorrichtung aufweisen, die es ermöglicht, das Greifelement unabhängig von der relativen Position des freien Endes des Trägerelements und einer zu greifenden Lagerstange immer exakt an der gewünschten Greifposition zu positionieren. Somit ist es möglich, kleinere Positionierungsungenauigkeiten der Trägerarme auszugleichen, ohne die gesamte Entnahmeeinheit zu betätigen. Dies führt zu einer einfacheren Bedienung und zu einer höheren Prozesssicherheit.

Bei einer bevorzugten Ausführungsform ist das Greifelement zangenartig ausgebildet, um eine Lagerstange beidseitig zu umgreifen. Hierbei ist es von besonderem Vorteil, dass das Greifelement zwei Backenelemente aufweist, die eine geöffnete und eine geschlossene Stellung aufweisen, wobei die Backenelemente eine geöffnete Stellung aufweisen, wenn sich das Greifelement in der eingefahrenen Position befindet und eine geschlossene Stellung, wenn sich das Greifelement in der ausgefahrenen Position befindet. Hierdurch wird sichergestellt, dass das Trägerelement möglichst nahe an der Lagerstange positioniert werden kann und die Greifelemente nicht versehentlich beim Positionieren an die Lagerstange anstoßen.

Der Übergang von der eingefahrenen Position, in der sich die Backenelemente in der geöffneten Stellung befinden, zu der ausgefahrenen Position, in der sich die Backenelemente in der geschlossenen Stellung befinden, kann einerseits dadurch erreicht werden, dass die Greifelemente zunächst von der eingefahrenen Position in die ausgefahrene Position überführt werden und danach die Backenelemente von der geöffneten Stellung in die geschlossenen Stellung gebracht werden. Andererseits können die Backenelemente bereits während dem Übergang von der eingefahrenen Position in die ausgefahrene Position von ihrer geöffneten Stellung in die geschlossene Stellung überführt werden.

Zangenartig ausgebildete Greifelemente eignen sich vorzugsweise für das Greifen der Lagerstangen von oben, so dass es von Vorteil ist, dass das Greifelement vertikal zwischen einer eingefahrenen und einer ausgefahrenen Position bewegbar ist.

Bei einer alternativen Ausführungsform eines Greifelements ist dieses hakenartig ausgebildet. Das hakenartig ausgebildete Greifelement eignet sich für das Greifen einer Lagerstange von vorne. Hierbei ist es von Vorteil, dass das Greifelement horizontal zwischen einer eingefahrenen und einer ausgefahrenen Position bewegbar ist.

Die in dem Regalbediengerät vorhandene Hubvorrichtung ermöglicht eine Positionierung der Entnahmeeinheit bzw. des Trägerelements in vertikaler Richtung. Um das Trägerelement in horizontaler Richtung zu positionieren, ist es von Vorteil, dass eine Teleskopeinheit vorgesehen ist. Bei einer ersten Ausführungsform weist das Trägerelement eine Teleskopeinheit auf. Bei einer alternativen Ausführungsform ist die Teleskopeinheit mit der Entnahmeeinheit verbunden.

Bei einer bevorzugten Weiterbildung weist das Trägerelement zwei nebeneinander, im Abstand voneinander angeordnete Trägerarme auf, an denen jeweils ein Greifelement angeordnet ist. Die Verwendung von zwei nebeneinander, im Abstand voneinander angeordneten Trägerarmen als Trägerelement hat sich als vorteilhaft erwiesen, da die Trägerelemente beidseitig außerhalb der hängenden Waren an den Endabschnitt einer Lagerstange angreifen können, um eine Lagerstange aus einem Hochregallager zu entnehmen bzw. in dieses einzuführen.

Um zu verhindern, dass ein Trägerarm versehentlich in hängende Ware eingreift, ist es von Vorteil, dass wenigstens ein Trägerarm schwenkbar oder verschiebbar an der Lagerstangenübertragungseinheit befestigt ist.

Gegenstand der vorliegenden Erfindung ist auch ein Hochregallager, umfassen ein erfindungsgemäßes Regalbediengerät.

Bevorzugte Ausführungsformen werden anhand der beigefügten Zeichnungen näher erläutert, in denen zeigen:
- Fig. 1: ein bekanntes Hochregallager;
- Fig. 2a - 2d: eine erste Ausführungsform eines Greifelements und dessen Funktionsweise;
- Fig. 3a - 3d: ein Greifelement gemäß einer zweiten Ausführungsform sowie dessen Funktionsweise.

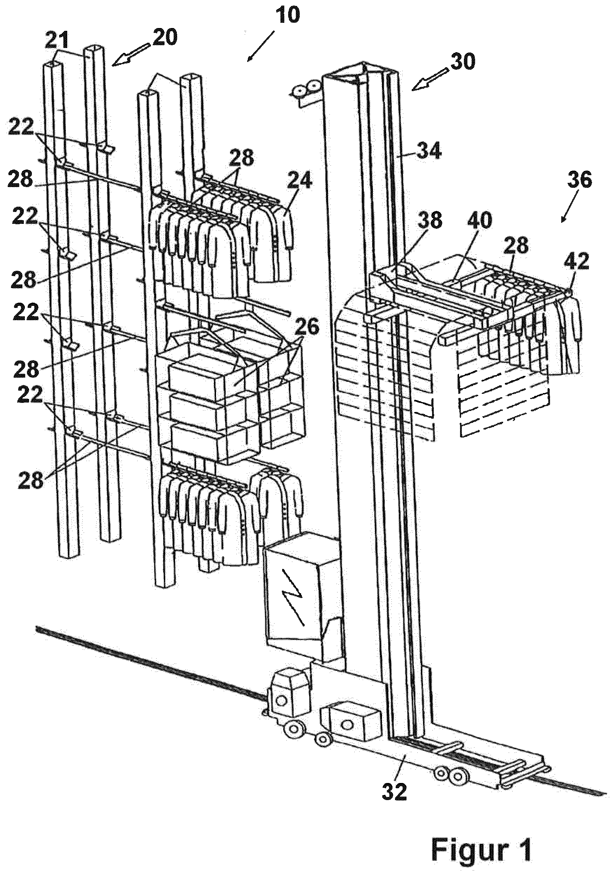

Fig. 1 zeigt ein bekanntes Hochregallager 10 für hängende Waren. Das Hochregallager 10 umfasst ein Hochregal 20, welches aus einer Vielzahl von Ständern 21 gebildet ist und verschiedene Lagerebenen 22 aufweist. Jede Lagerebene 22 kann mit hängenden Waren wie Bekleidungsstücken 24 oder hängenden Boxen 26 bestückt werden. Hierfür sind entsprechende Lagerstangen 28 vorgesehen, die in das Hochregal 20 eingelagert werden. Die zu lagernde hängende Ware oder die hängenden Boxen hängen hierbei auf den Lagerstangen 28.

Zum Be- und Entladen des Hochregals 20 sind Regalbediengeräte 30 vorgesehen. Das Regalbediengerät 30, welches zwischen den Hochregallagern 20 verfahrbar ist, umfasst eine Fahreinheit 32, einen Hubmast 34 mit einer Hubvorrichtung sowie eine Entnahmeeinheit 36. Die Entnahmeeinheit 36 ist höhenverstellbar an dem Hubmast 34 mittels eines Basiselementes 38 befestigt. Senkrecht zum Basiselement 38 und senkrecht zur Fahrtrichtung des Fahrgerätes 32 sind Trägerarme 40 vorgesehen, die Teil einer Lagerstangenübertragungseinheit sind. Die Trägerarme 40 sind nebeneinander und im Abstand voneinander angeordnet. Der Abstand der Trägerarme 40 ist so gewählt, dass die Trägerarme 40 eine Lagerstange 28 an ihren beiden Enden greifen können, um die Lagerstange 28 in ein Hochregal 20 einzulagern oder aus dem Hochregallager herauszunehmen. Die Lagerstangen 28 werden an dem freien Ende 42 der Trägerarme 40 mittels eines Halteelements gehalten.

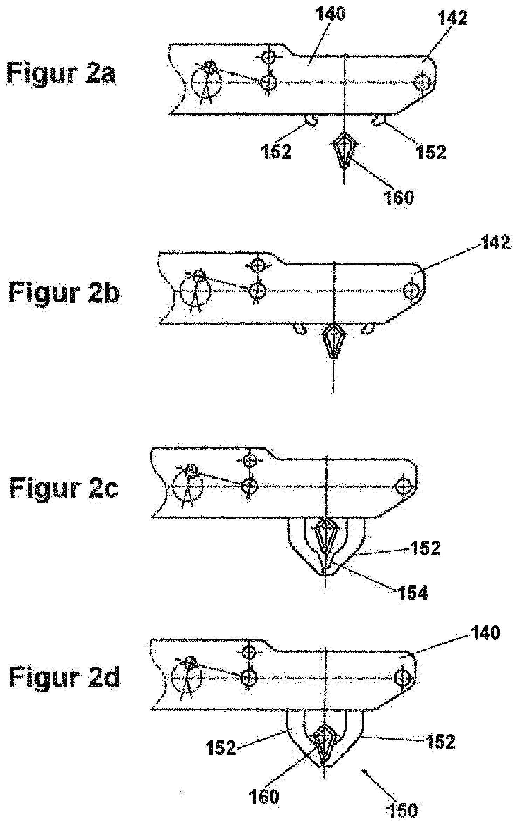

In den Figuren 2a bis 2d ist eine erste Ausführungsform eines solchen Halteelements in Form eines Greifelements 150 dargestellt, welches an einem Trägerarm 140 befestigt ist und bei welchem das Greifen der Lagerstange 160 von oben erfolgt.

Das Greifelement 150 ist zangenartig ausgebildet und weist zwei Backenelemente 152 auf. Das Greifelement 150 ist unterhalb des Trägerarms 140 am freien Ende 142 des Trägerarms 140 angeordnet. Die Backenelemente 152 sind jeweils schwenkbar an einer nicht dargestellten Verschiebevorrichtung befestigt und können von einer wie in Fig. 2a dargestellten geöffneten Stellung in eine in 2-D dargestellte geschlossene Stellung überführt werden. In der geschlossenen Stellung ist das Greifelement 150 in der Lage, eine Lagerstange 160 zu umfassen und zu halten. Die Verschiebevorrichtung wiederum ist mit dem Trägerelement 140 verbunden und kann in dem Trägerarm 140 oder außerhalb des Trägerarms 140 an einer Seitenfläche des Trägerarms 140 vorgesehen sein. Das Greifelement 150 ist mittels der Verschiebevorrichtung senkrecht zur Längsachse des Trägerarms 140 in vertikaler Richtung verschiebbar.

In einer eingefahrenen Position ragen die freien Enden der Backenelemente 152 geringfügig über die Unterseite des Trägerarms 140 hinaus. Bei einer nicht dargestellten Ausführungsform sind die freien Enden der Backenelemente 152 seitlich vollständig von dem Trägerarm bedeckt. In der ausgefahrenen Position sind die Backenelemente152 unterhalb des Trägerarms 140 so weit ausgefahren, dass sie in der Lage sind, eine Lagerstange vollständig zu umgreifen.

Die Form der Backenelemente 152 ist an den Endabschnitten der Backenelemente 152 der Querschnittskontur der Lagerstange 160 angepasst, so dass die Backenelemente 152 die Lagerstange 160 nicht nur umgreifen, sondern zumindest abschnittsweise auch seitlich führen können. Im Detail weist das Greifelement 150 in seiner geschlossenen Stellung eine Vertiefung 154 auf, die in Größe und Form dem unteren Abschnitt der Lagerstange 160 angepasst ist.

Um beispielsweise eine Lagerstange aus einem Hochregal zu entnehmen, wird der Trägerarm 140 oberhalb der Lagerstange 160 in ein Hochregal eingeführt. Zunächst erfolgt eine horizontale Positionierung des Trägerarms 140 mittels nicht dargestellter Teleskopeinrichtungen, die eine horizontale Verstellung des Trägerarms 140 ermöglichen (siehe Fig. 2a). Im nächsten Schritt wird die Entnahmeeinheit in vertikaler Richtung exakt über der Lagerstange 160 angeordnet. Diese Positionierung erfolgt üblicherweise mittels der Hubvorrichtung. Die Backenelemente 152 ragen in ihrer geöffneten Stellung geringfügig mit ihren Endabschnitten unterhalb des Trägerarms 140 aus diesem hervor (siehe Fig. 2b), so dass die Backenelemente bei der Positionierung des Trägerarms 140 nicht störend im Weg sind und versehentlich an die Lagerstange 160 stoßen. Sobald der Trägerarm 140 die richtige Position über der Lagerstange 160 erreicht hat, wird das Greifelement 150 mittels der Verschiebevorrichtung zunächst vertikal nach unten verschoben. Anschließend werden die Backenelemente 152 geschlossen, so dass die Backenelemente 152 die Lagerstange 160 umschließen (siehe Fig. 2c). Im nächsten Schritt kann der Trägerarm 140 mittels der Hubvorrichtung angehoben werden, um die Lagerstange 160 aus ihrer Lagerposition nach oben herauszuheben (siehe Fig. 2d). In bekannter Weise kann der Trägerarm 140 dann in horizontaler Richtung aus dem Hochregal herausgefahren werden.

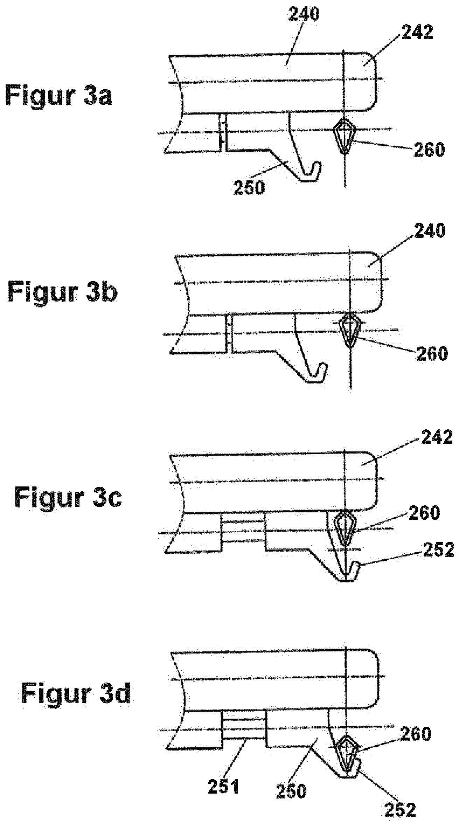

Alternativ zu der dargestellten Ausführungsform beginnen sich die Backenelemente bereits zu schließen, während das Greifelement vertikal nach unten bewegt wird. Das Verschieben des Greifelements und das Schließen der Backenelemente erfolgt somit zeitgleich. Die Figuren 3a bis 3d zeigen eine zweite Ausführungsform eines Greifelements 250, bei der das Greifen der Lagerstange 260 von vorne erfolgt. Das hakenartig ausgebildete Greifelement 250 ist unterhalb eines Trägerarms 240 an dessen freien Ende 242 angeordnet und bezüglich des freien Endes des Trägerarms 240 mittels einer Verschiebevorrichtung 251 in horizontaler Richtung verschiebbar.

In seiner eingefahrenen Position befindet sich das hakenartig ausgebildete Greifelement 250 mit größerem Abstand vom freien Ende 242 des Trägerelements 240 als in seiner ausgefahrenen Position. Das hakenartig ausgebildete Greifelement 250 weist einen Hakenabschnitt 252 auf, der an die Kontur der Lagerstange 260 angepasst ist, um die Lagerstange 260 während des Transports seitlich zu führen. Der Abstand des Hakenabschnitts 252 zur Unterseite des Trägerarms 240 ist so gewählt, dass dieser größer als die Höhe der aufzunehmenden Lagerstange 260 ist, um die Lagerstange 260 zwischen dem Hakenabschnitt 252 und dem Trägerarm 240 in das Greifelement 250 einführen zu können.

Wie in Fig. 3a zu erkennen ist, wird das freie Ende 242 des Trägerarms 240 oberhalb der Lagerstange 260 positioniert. Das Greifelement 250 befindet sich in seiner eingefahrenen Position fern von der Lagerstange 260. Im nächsten Schritt (Fig. 3b) wird der Trägerarm 240 in vertikaler Position genau über der Lagerstange 260 positioniert. Befindet sich der Trägerarm 240 genau über der Lagerstange 260, wird das Greifelement 250 horizontal verschoben, bis der Hakenabschnitt 252 exakt unterhalb der Lagerstange 260 positioniert ist (siehe Fig. 3c). Im nächsten Schritt kann der Trägerarm 240 mittels der Hubvorrichtung angehoben werden, um die Lagerstange 260 aus dem Lagerort zu entfernen.

Es versteht sich, dass bei einer Entnahmeeinheit üblicherweise beide Trägerarme mit dem gleichen Greifelement versehen sind.

Der Abstand zwischen der eingefahrenen Position und der ausgefahrenen Position eines Greifelements kann fest vorgegeben sein. Um Positionierungstoleranzen der Entnahmeeinheit auszugleichen, ist es jedoch von Vorteil, dass die Verschiebevorrichtung über Mittel verfügt, die es ermöglichen, den Abstand zwischen der eingefahrenen Position und der ausgefahrenen Position eines Greifelements variabel auf die tatsächliche Lage der Lagerstange in Bezug auf das freie Ende des Trägerarms anzupassen bzw. das Greifelement in der ausgefahrenen Position immer exakt an der Stelle des Trägerarms zu positionieren, an der die Lagerstange gegriffen werden soll.

Wenn bei den dargestellten Ausführungsformen das Trägerelement als Trägerarm dargestellt ist, so können auch plattenartige Trägerelemente im Rahmen der Erfindung vorgesehen sein.

Die vertikale Verstellung des Trägerelements erfolgt über die horizontale Verstellung der Entnahmeeinheit mittels der Hubvorrichtung. Für die horizontale Verstellung der Trägerarme können einerseits teleskopartige Trägerarme vorgesehen sein, wobei das Greifelement an dem freien Ende des äußersten teleskopartigen Trägerarms angeordnet ist. Alternativ kann die gesamte Entnahmeeinheit teleskopartig verstellt werden, beispielsweise durch einen Teleskoptisch.

Bei der in Fig. 1 dargestellten Ausführungsform sind die Trägerelemente starr mit der Basis verbunden. Die erfindungsgemäßen Greifelemente können jedoch auch an Trägerarmen befestigt sein, die bezüglich der Basis schwenkbar oder verschiebbar sind.

Bei nicht dargestellten Ausführungsformen kann das zangenartige Greifelement horizontal verschiebbar sein. Hierbei sind die Zangenbacken vorzugsweise horizontal ausgerichtet.

## Patentansprüche

1. Regalbediengerät geeignet für den Einsatz in einem Hochregallager (10) umfassend eine Fahreinheit (32), eine Hubvorrichtung (34) und eine Entnahmeeinheit (36), die mittels der Hubvorrichtung (34) in vertikaler Richtung verfahrbar ist, wobei die Entnahmeeinheit (36) eine Lagerstangenübertragungseinheit umfasst, an der in horizontaler Richtung ein Trägerelement mit einem freien Endabschnitt (142; 242) vorgesehen ist, wobei an dem freien Endabschnitt (142; 242) unterhalb des Trägerelements wenigstens ein Greifelement (150; 250) angeordnet ist, **dadurch gekennzeichnet, dass** das wenigstens eine Greifelement (150; 250) bezüglich des freien Endabschnitts (142; 242) des Trägerelements vertikal und/oder horizontal zwischen einer eingefahrenen und einer ausgefahrenen Position verschiebbar ist.

2. Regalbediengerät nach Anspruch 1, **dadurch gekennzeichnet, dass** der Abstand zwischen der eingefahrenen und der ausgefahrenen Position variabel einstellbar ist.

3. Regalbediengerät nach Anspruch 1 oder 2, **dadurch gekennzeichnet, dass** das Greifelement (150) zangenartig ausgebildet ist.

4. Regalbediengerät nach Anspruch 3, **dadurch gekennzeichnet dass** das Greifelement (150) zwei Backenelemente (152) aufweist, die eine geöffnete und eine geschlossene Stellung aufweisen, wobei das Backenelement (152) eine geöffnete Stellung aufweist, wenn sich das Greifelement (150) in der eingefahrenen Position befindet, und eine geschlossene Stellung, wenn sich das Greifelement (150) in der ausgefahrenen Position befindet.

5. Regalbediengerät nach Anspruch 3 oder 4, **dadurch gekennzeichnet, dass** das Greifelement (150) vertikal zwischen einer eingefahrenen und einer ausgefahrenen Position bewegbar ist.

6. Regalbediengerät nach Anspruch 1 oder 2, **dadurch gekennzeichnet, dass** das Greifelement (250) hakenartig ausgebildet ist.

7. Regalbediengerät nach Anspruch 6, **dadurch gekennzeichnet, dass** das Greifelement (250) horizontal zwischen einer eingefahrenen und einer ausgefahrenen Position bewegbar ist.

8. Regalbediengerät nach einem der vorhergehenden Ansprüche, **dadurch gekennzeichnet, dass** eine Teleskopeinheit vorgesehen ist.

9. Regalbediengerät nach Anspruch 8, **dadurch gekennzeichnet, dass** das Trägerelement eine Teleskopeinheit aufweist und/oder die Entnahmeeinheit mit einer Teleskopeinheit verbunden ist.

10. Regalbediengerät nach einem der vorhergehenden Ansprüche, **dadurch gekennzeichnet, dass** das Trägerelement zwei nebeneinander, im Abstand voneinander angeordnete Trägerarme (140; 240) aufweist, an denen jeweils wenigstens ein Greifelement (150; 252) angeordnet ist.

11. Regalbediengerät nach Anspruch 10, **dadurch gekennzeichnet, dass** wenigstens ein Trägerarm schwenkbar oder verschiebbar an der Lagerstangenübertragungseinheit befestigt ist.

12. Hochregallager umfassend ein Regalbediengerät (30) nach einem der Ansprüche 1 bis 11.
